# EUROPÄISCHE PATENTSCHRIFT

(11) **EP 3 731 380 B1**
(45) Veröffentlichungstag und Bekanntmachung des Hinweises auf die Patenterteilung: **18.08.2021**
(21) Anmeldenummer: 20000185.7
(22) Anmeldetag: 07.04.2016
(51) Int. Cl.: H02K 5/20, H02K 7/116, H02K 9/16, H02K 5/02, H02K 9/22

(54) **ANTRIEBSVORRICHTUNG**
DRIVE DEVICE
DISPOSITIF D'ENTRAÎNEMENT

(30) Priorität: 28.05.2015 DE 102015006688
(43) Veröffentlichungstag der Anmeldung: 28.10.2020
(62) Teilanmeldung aus: 16715795.7
(73) Patentinhaber: SEW-EURODRIVE GmbH & Co. KG, 76646 Bruchsal (DE)
(72) Erfinder: Hettel, Domenik, D-76474 Au am Rhein (DE); Schillinger, Jens, D-76437 Rastatt (DE); Becker, Waldemar, D-76676 Graben-Neudorf (DE); Rung, Thomas, D-76689 Karlsdorf-Neuthard (DE)

(56) Entgegenhaltungen:
- WO-A2-2011/154205
- DE-A1- 2 634 059
- US-A1- 2009 208 351

## Beschreibung

Die Erfindung betrifft eine Antriebsvorrichtung.

Es ist allgemein bekannt, dass ein Getriebemotor als Antriebsvorrichtung verwendbar ist.

**Aus der** DE 26 34 059 A1 **ist als nächstliegende Stand der Technik ein Kühlkreislauf für einen Staubsaugermotor bekannt, bei welchem ein Motorgehäuse von einem äußeren Gehäuse umgeben ist.**

**Aus der** US 2009 /208351 A1 **ist ebenfalls ein äußeres Gehäuse bekannt, das ein Motorgehäuse umgibt.**

**Aus der** WO 2011/154205 A1 **ist eine Maschine mit Luft-Flüssigkeitskühlung bekannt.**

Der Erfindung liegt daher die Aufgabe zugrunde, einen Getriebemotor für Maschinen der Nahrungsmittelindustrie weiterzubilden.

Erfindungsgemäß wird die Aufgabe bei der Antriebsvorrichtung nach den in Anspruch 1 angegebenen Merkmalen gelöst.

Wichtige Merkmale der Erfindung bei der Antriebsvorrichtung sind, dass sie einen Elektromotor und ein von dem Elektromotor angetriebenes Getriebe aufweist,
wobei der Elektromotor ein Statorblechpaket mit Statorwicklungen aufweist, dass in einem Statorgehäuse aufgenommen ist,
wobei das Statorgehäuse axial, insbesondere also in Rotorwellenachsrichtung, durchgehende Ausnehmungen aufweist,
wobei das Statorgehäuse von einem Gehäuse, insbesondere Rohrgehäuse und/oder topfförmige Gehäuse, der Antriebsvorrichtung umgeben ist, insbesondere radial umgeben ist, wobei das Gehäuse vom Statorgehäuse beabstandet ist,
insbesondere so, dass ein insbesondere zirkulierender Luftstrom innerhalb des Gehäuses ausbildbar ist, insbesondere wobei die Ausnehmungen den Luftstrom in axialer Richtung durchführen und der Luftstrom im beabstandeten Bereich zwischen Statorgehäuseteil und Gehäuse in entgegengesetzter Richtung rückgeführt wird.

Von Vorteil ist dabei, dass der Getriebemotor von einem Gehäuse umgeben ist und somit in einer Maschine der Nahrungsmittelindustrie einsetzbar ist. Dabei ist eine verbesserte Entwärmung durch den Luftstrom realisiert, der in berührungsloser Weise Wärme vom Statorgehäuse zum Gehäuse der Antriebsvorrichtung transportiert. Der Luftstrom nimmt die vom Motor erzeugte Wärme auf und gibt sie an der Innenseite des Gehäuses an dieses ab. Somit ist als **Gehäuse ein schlechterer Wärmeleiter verwendbar als als Statorgehäuse.** Denn das umgebende Gehäuse hat eine größere Innenfläche als die Außenfläche des Statorgehäuses. Die Umlenkung des Luftstroms erfolgt im Bereich des Getriebes, wodurch Wärme nicht nur des Motors sondern auch des Getriebes an den Luftstrom übertragen wird. Somit ist eine effektive Entwärmung des Getriebemotors ermöglicht.

Der Luftstrom verteilt also die Wärme im vom Gehäuse umschlossenen Innenraum. Dabei ist aber Gehäuse und Statorgehäuse voneinander beabstandet. Es liegt also keine direkte Berührung zwischen den beiden Teilen vor. Sie sind somit aus verschiedenen Werkstoffen herstellbar, wobei das Gehäuse wegen der radial weiteren Ausdehnung, also der das Statorgehäuse beabstandet umgebenden Ausformung, eine größere Innenfläche aufweist als das Statorgehäuse eine Außenfläche aufweist. Durch die Beabstandung ist also sogar ein schlechterer Wärmeleiter, wie beispielsweise Stahl, als Gehäuse verwendbar. Die Verwendung von Aluminium für das Statorgehäuse ermöglicht die Ausführung desselben als Stranggussteil. Somit sind die Kanäle für den Luftstrom in einfacher Weise erzeugbar. Der das Gehäuse verschließende Deckel ist ebenfalls aus Stahl ausführbar. Alternativ ist er auch aus Kunststoff ausführbar, wobei dann die Entwärmung durch den Deckel hindurch weniger effektiv ist.

Bei einer vorteilhaften Ausgestaltung ist das Statorgehäuse ein Stranggussteil, insbesondere wobei die Ziehrichtung parallel zur axialen Richtung, insbesondere also parallel zur Rotorwellenachsrichtung, ist. Von Vorteil ist dabei, dass eine einfache Herstellung ermöglicht ist, wobei das Stranggussteil in Ziehrichtung Kanäle eingeformt bekommt. Somit ist eine effektive Entwärmung ermöglicht. Außerdem ist die Länge des Statorgehäuses je nach herzustellendem Motor wählbar. Das Statorblechpaket samt Statorwicklungen ist in einfacher Weise einschiebbar in das Statorgehäuse, welches hierzu eine mittig angeordnete große Ausnehmung aufweist.

Bei einer vorteilhaften Ausgestaltung weist das Getriebe ein erstes und ein zweites Gehäuseteil auf, die miteinander verbunden sind,
wobei das Statorgehäuse mit dem zweiten Gehäuseteil verbunden, insbesondere schraubverbunden, ist,
wobei das Gehäuse, insbesondere Rohrgehäuse und/oder topfförmige Gehäuse, der Antriebsvorrichtung mit dem zweiten Gehäuseteil verbunden, insbesondere schraubverbunden, ist. Von Vorteil ist dabei, dass der Motor vom Getriebe gehalten ist. Denn durch das Schraubverbinden des Statorgehäuses mit dem zweiten Gehäuseteil ist auch das im Statorgehäuse angeordnete Statorblechpaket und die zugehörigen Statorwicklungen gehalten. Zusätzlich ist das Statorgehäuse auf seiner vom Getriebe abgewandten Seite mit einem Lagerflansch verbindbar, der an seiner vom Statorgehäuse abgewandten Seite mit dem Gehäuse oder einem mit dem Gehäuse verbundenen Deckel verbindbar ist, so dass eine Abstützung des Statorgehäuses auf dessen vom Getriebe abgewandten Seite ausführbar ist.

Bei einer vorteilhaften Ausgestaltung strömt der Luftstrom aus den Ausnehmungen des Statorgehäuses jeweilige Ausnehmungen des zweiten Gehäuseteils durch,
insbesondere die durch am zweiten Gehäuseteil hervor ragende Rippen zumindest teilweise begrenzt sind. Von Vorteil ist dabei, dass der Luftstrom aus den im Statorgehäuseteil geführten Kanälen am zweiten Gehäuseteil vorbeiströmt und dann erst zum Gehäuse, insbesondere Rohrgehäuse, strömt. Somit ist eine effektive Entwärmung nicht nur des Motors sondern auch des Getriebes ermöglicht.

Bei einer vorteilhaften Ausgestaltung sind das Statorgehäuse aus einem zweiten Werkstoff und das Gehäuse aus einem ersten Werkstoff gefertigt,
wobei der **zweite** Werkstoff eine höhere Wärmeleitfähigkeit aufweist als der **erste** Werkstoff. Von Vorteil ist dabei, dass trotz der schlechten Wärmeleitfähigkeit des Gehäuses eine effektive Entwärmung realisierbar ist. Hierzu wird mit dem Luftstrom ein Aufspreizen des Wärmestroms erreicht und der Wärmestrom über das umgebende und somit eine große Oberfläche aufweisende Gehäuse an die Umgebung abgeführt.

Bei einer vorteilhaften Ausgestaltung weist das Statorgehäuse an der dem Gehäuse zugewandten Oberfläche, insbesondere an seiner Außenfläche, eine Beschichtung auf zur Erhöhung der abgestrahlten Wärmeleistung. Von Vorteil ist dabei, dass ein verringerter Wärmeübergangswiderstand vom Statorgehäuse bis zur Umgebung erreichbar ist.

Bei einer vorteilhaften Ausgestaltung weist das Gehäuse an der dem Statorgehäuse zugewandten Oberfläche, insbesondere an seiner Innenfläche, eine Beschichtung auf zur Erhöhung der absorbierten Wärmeleistung. Von Vorteil ist dabei, dass wiederum ein verringerter Wärmeübergangswiderstand vom Statorgehäuse bis zur Umgebung erreichbar ist.

Bei einer vorteilhaften Ausgestaltung ist der Luftstrom konvektiv, insbesondere nur konvektiv, angetrieben. Von Vorteil ist dabei, dass ein aktives Antreiben nicht notwendig ist.

Bei einer vorteilhaften Ausgestaltung ist zumindest ein Lüfter oder sind zwei Lüfter zum Antreiben des Luftstroms an einem Lagerflansch des Motors angeordnet. Von Vorteil ist dabei, dass ein aktives Antreiben ermöglicht ist und somit ein effektives Entwärmen ausführbar ist.

Bei einer vorteilhaften Ausgestaltung weist der Lagerflansch einen insbesondere kreisförmigen Grundplattenabschnitt auf und einen daran angeordneten Trennwandabschnitt,
wobei der Trennwandabschnitt zur Trennung des Luftstroms von einem Raumbereich vorgesehen ist, der den B-seitigen, insbesondere den vom Getriebe abgewandten, axialen Endbereich der Rotorwelle umgibt oder einen an diesem Endbereich angeordneten Winkelsensor zumindest teilweise umgibt. Von Vorteil ist dabei, dass der Raumbereich des Sensors staubfrei und getrennt gehalten ist von dem Luftstrom. Somit ist ein fehlerfreies Arbeiten des Sensors gewährleistbar. Außerdem wird die Entwärmung mittels des Luftstroms ausgeführt und somit der Sensor thermisch geringer belastet, insbesondere mit geringeren Temperaturhüben beim Einschalten oder Ausschalten des Motors oder auch während des Betriebs.

Bei einer vorteilhaften Ausgestaltung ist im Lagerflansch ein Lager einer Rotorwelle des Motors aufgenommen. Von Vorteil Ist dabei, dass der Lagerflansch nicht nur zur Aufnahme eines Lagers, sondern auch zur Trennung des Luftstroms vom Raumbereich des Sensors eingesetzt wird. Außerdem sind am Lagerflansch noch Lüfter befestigbar, welche den Luftstrom aktiv antreibbar machen.

Bei einer vorteilhaften Ausgestaltung ist der Trennwandabschnitt in einer ersten Umfangswinketrichtung radial weniger ausgedehnt als in einer von der ersten unterschiedlichen zweiten Umfangswinkelrichtung. Von Vorteil ist dabei, dass an der Schmalseite ein oder mehrere Lüfter anordenbar sind. Somit ist die aktive Förderung des Luftstroms in kompakter Weise ausführbar.

Bei einer vorteilhaften Ausgestaltung ist der Lüfter radial außerhalb des Trennwandabschnitts angeordnet, wobei der Lüfter von der zweiten Umfangswinkelrichtung in Umfangsrichtung beabstandet ist,

insbesondere wobei der vom Lüfter überdeckte Umfangswinkelbereich den ersten Umfangswinkel umfasst. Von Vorteil ist dabei, dass die beiden Lüfter voneinander beabstandet sind, insbesondere diametral gegenüberstehend anordenbar sind, so dass eine möglichst symmetrische Luftströmung im Motor erreichbar ist.

Bei einer vorteilhaften Ausgestaltung ist der Trennwandabschnitt an der vom Getriebe abgewandten axialen Seite des Grundplattenabschnitts angeordnet. Von Vorteil ist dabei, dass die Umlenkung des Luftstroms im Bereich des Lagerflansches ausgeführt wird und zwar auf der vom Statorgehäuse abgewandten Seite. Somit umströmt der Luftstrom den Lagerflansch und entwärmt diesen ebenfalls. Die vom im Lagerflansch aufgenommenen Lager erzeugte Wärme wird auf diese Weise effektiv abtransportiert.

Bei einer vorteilhaften Ausgestaltung ist am Trennwandabschnitt ein Vorsprung zur axialen Begrenzung des Lüfters angeformt. Von Vorteil ist dabei, dass der Lüfter in einfacher Weise exakt positionierbar ist.

Bei einer vorteilhaften Ausgestaltung weist der Grundplattenabschnitt zumindest eine, insbesondere zwei, Ausnehmungen auf zur Kabeldurchführung.
das Statorgehäuse an der dem Gehäuse zugewandten Oberfläche, insbesondere an seiner Außenfläche, eine Beschichtung aufweist zur Erhöhung der abgestrahlten Wärmestrahlung, der Grundplattenabschnitt eine mittig angeordnete Ausnehmung zur Aufnahme eines Stators eines Winkelsensors. Von Vorteil ist dabei, dass elektrische Leitungen als Kabel vom Statorraumbereich, insbesondere von den Statorwicklungen zum Sensor in einfacher Weise durchführbar sind. Somit sind die Leitungen durchführbar, wobei der Luftstrom abgetrennt ist von der Kabeldurchführung.

Bei einer vorteilhaften Ausgestaltung weist das zweite Gehäuseteil taschenförmige Vertiefungen an seine Oberfläche auf, an welchen der Luftstrom vorbeiströmt,
insbesondere so, dass Schmutz, Staub und/oder vom Luftstrom in den taschenförmigen Vertiefungen, insbesondere Luftkammem, des zweiten Gehäuseteils ablagerbar ist,
wobei ein Verbindungselement, insbesondere Schraube, das erste Gehäuseteil mit dem zweiten Gehäuseteil verbindet und der zur Betätigung des Verbindungelements mit einem Werkzeug benötigte Raumbereich mittels der Vertiefung bereitgestellt wird. Von Vorteil ist dabei, dass die taschenförmigen Vertiefungen nicht nur als Staub- oder Schmutzfänger ausgeführt sind, sondern auch einen freien Betätigungsraumbereich bieten für die Betätigung der Schraubverbindung zwischen Gehäuseteilen des Getriebes, insbesondere zwischen erstem und zweitem Gehäuseteil des Getriebes.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erfindungsgemäße angeschnitten dargestellte Antriebsvorrichtung in Schrägansicht gezeigt.

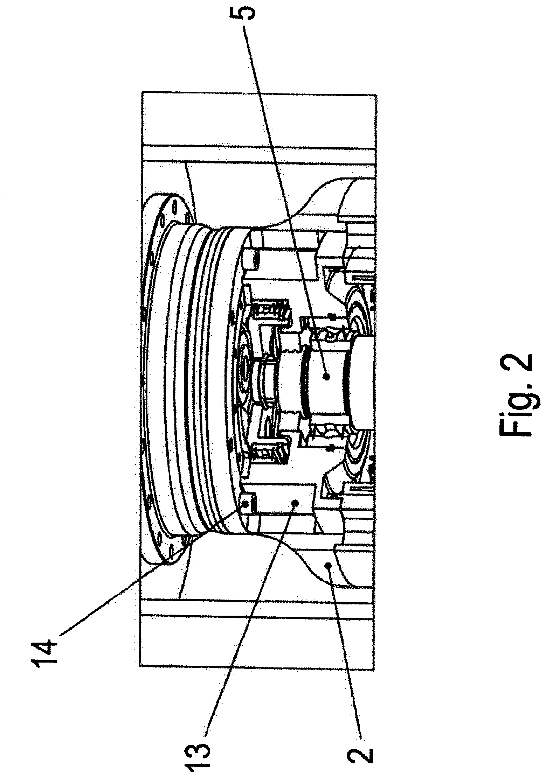

In der Figur 2 ist ein zugehöriger Ausschnitt in Schrägansicht aus einer anderen Blickrichtung dargestellt.

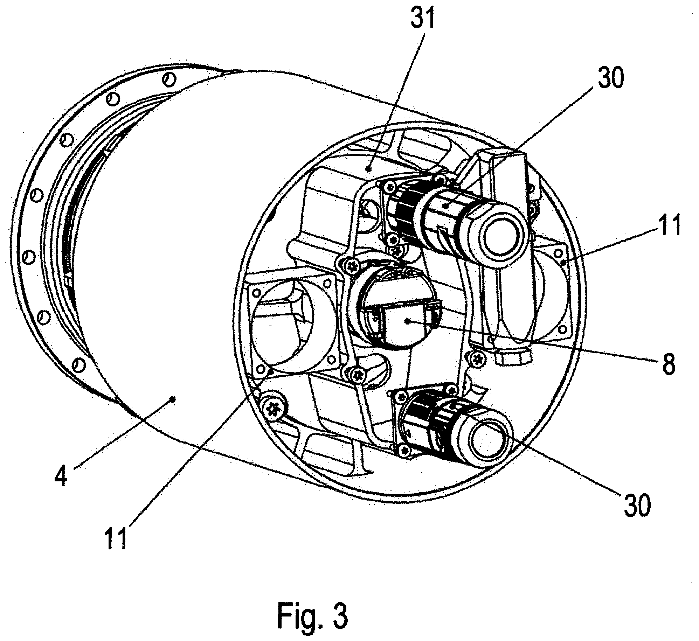

In der Figur 3 ist eine Schrägansicht auf das B-seitige Ende der Antriebsvorrichtung dargestellt.

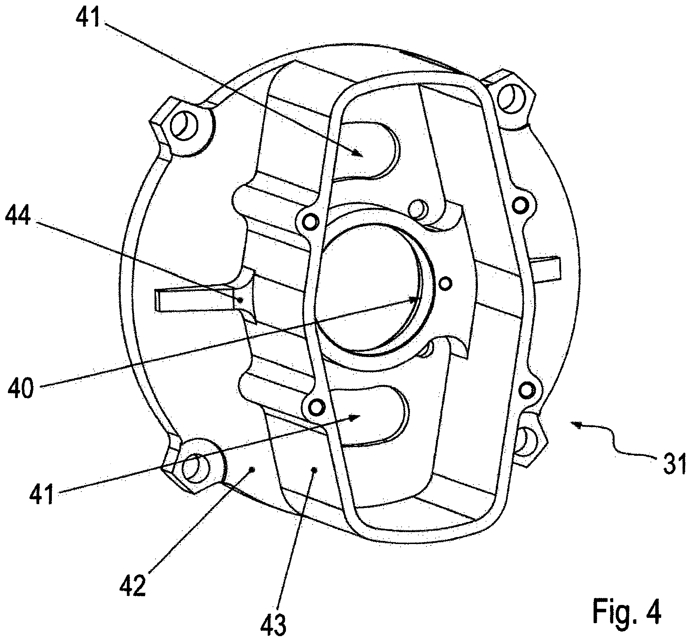

In der Figur 4 ist eine Schrägansicht auf den B-seitigen Lagerflansch dargestellt.

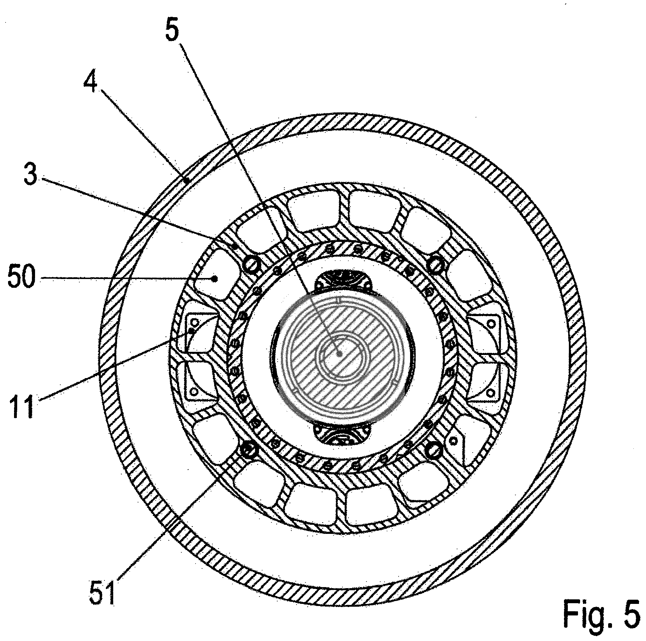

In der Figur 5 ist ein zugehöriger Querschnitt dargestellt.

Wie in den Figuren gezeigt, weist die Antriebsvorrichtung ein von einem Elektromotor angetriebenes Getriebe auf.

Das Gehäuse des Getriebes ist aus einem ersten und einem zweiten Gehäuseteil (1, 2) zusammengesetzt. Diese Gehäuseteile (1, 2) sind miteinander schraubverbunden mittels einer Schraubverbindung (14).

Das erste Gehäuseteil 1 umfasst eine Getriebestufe, die einer eintreibenden Stufe, welche vom zweiten Gehäuseteil 2 umfasst ist, nachgeordnet ist.

Das zweite Gehäuseteil 2 nimmt nicht nur ein Lager der eintreibenden Welle auf, sondern auch ein Hohlrad der als Planetengetriebestufe ausgeführten eintreibenden Getriebestufe.

Das Hohlrad ist hierbei aus einem ersten Werkstoff, wie Stahl, und das zweite Gehäuseteil 2 aus einem anderen Werkstoff, wie Aluminium. Somit ist der aufnehmende und somit die Wärme aufspreizende Werkstoff besser wärmeleitend als der Werkstoff des Hohlrades. Das zweite Gehäuseteil 2 nimmt also Wärme vom Hohlrad und Wärme des eintreibenden Lagers auf.

Die eintreibende Welle ist drehfest mit einem Sonnenrad verbunden, das mit Planetenrädern im Eingriff ist, welche an einem Planetenträger drehbar gelagert sind, der mit dem eintreibenden Verzahnungsteil der nachgeordneten Stufe drehfest verbunden ist. die Planetenräder sind mit der Innenverzahnung des Hohlrades.

Die eintreibende Welle ist drehfest mit dem Rotor 5 des Elektromotors verbunden oder einteilig mit diesem ausgeführt, also selbst als Rotorwelle ausgeführt.

Der Elektromotor ist als Synchronmotor ausgeführt, wobei der Rotor 5 Permanentmagnete aufweist.

Der den Rotor umgebende Stator 6 weist ein Statorblechpaket auf, das aus bewickelten Einzelzähnen zusammengesetzt ist.

Das Statorblechpaket ist in einem Statorgehäuse 3 aufgenommen, das vorzugsweise als Stranggussteil gefertigt ist und dabei in axialer Richtung sich erstreckende, also in Richtung der Rotorwellenachse sich erstreckende, Ausnehmungen aufweist, die als Kanäle für einen Luftstrom wirksam sind.

Das Statorblechpaket ist dabei kraftschlüssig, insbesondere thermisch geschrumpft, verbunden mit dem Statorgehäuse 3. Zur Herstellung der Verbindung weisen Statorblechpaket und Statorgehäuse 3 vor dem ineinander Fügen zueinander unterschiedliche Temperaturen auf. Nach Anpassung der Temperaturen sind das Statorblechpaket, das vorzugsweise aus Stahlblechteilen zusammengesetzt ist, und das Statorgehäuse, das vorzugsweise aus Aluminium gefertigt ist, kraftschlüssig verbunden.

Am B-seitigen Endbereich der Rotorwelle 5 ist eine Bremse 7 und ein Winkelsensor 8 angeordnet, wobei der Rotor des Winkelsensors 8 drehfest mit der Rotorwelle 5 verbunden ist und der Stator des Winkelsensors 8 drehfest in einem Lagerflansch 31 aufgenommen ist, der drehfest mit dem Statorgehäuse 3 verbunden ist, insbesondere schraubverbunden.

Mit dem Gehäuse des Getriebes, insbesondere mit dem ersten Gehäuseteil 1, ist ein Gehäuse 4, insbesondere Rohrgehäuse, schraubverbunden, welches den das Getriebe antreibenden Elektromotor umgibt.

Auf der vom Getriebe abgewandten Seite ist das Gehäuse 4, insbesondere Rohrgehäuse, verschlossen von einem Deckel 10. Somit ist der Elektromotor von einem geschlossenen Raumbereich umgeben.

Der Lagerflansch weist zwei axial durchgehende Ausnehmungen auf, in welchen Lüfter 11 anordenbar sind, die einen Luftstrom durch die Kanäle des Stranggussteils, also Statorgehäuses 3 fördern, der durch Ausnehmungen im zweiten Gehäuseteil 2 zum Raumbereich zwischen Statorgehäuse 3 und Gehäuse 4, insbesondere Rohrgehäuse, geleitet wird und von dort wiederum durch die Lüfter 11 zu den Kanälen im Stranggussteil, also Statorgehäuse 3.

(Die Lüfterflügel des Lüfters 11 sind nicht näher dargestellt, weil der Lüfter 11 nur schematisch skizziert ist.)

Aber auch ohne die aktive Förderwirkung der Lüfter 11, die jeweils einen antreibenden Lüftermotor 30 aufweisen, ist der Luftstrom gefördert. Denn die vom Motor erzeugte Wärme wird vom Statorgehäuse 3 an den Luftstrom abgegeben, dieser also aufgewärmt. Bei der in den Figuren dargestellten Montagerichtung, also bei einem Getriebe, das höher angeordnet ist als der B-seitige Endbereich der Rotorwelle 5 und/oder der Bremse 7 und/oder des Winkelsensors 8, fließt der aufgewärmte Luftstrom 12 nach oben, so dass der im Zwischenbereich sich befindenden Luftanteil seine Wärme am Gehäuse 4 abgibt und daher nach unten sinkt. Der Luftstrom 12 sinkt also in einem ersten Radialabstandsbereich nach unten und steigt in einem zweiten Radialabstandsbereich nach oben, wobei der erste Bereich radial weiter außen als der zweite Beriech ist, also die Radialabstandswerte des ersten Bereichs größer sind als diejenigen des zweiten Bereichs. Durch diese konvektive Strömung ist also eine verbesserte Entwärmung in einfacher Weise erreichbar,

Die im zweiten Gehäuseteil 2 ausgeformten Ausnehmungen sind zumindest teilweise von radial am Gehäuseteil 2 hervorragenden Rippen 15 berandet. Somit ist auch Wärme vom Hohlrad der eintreibenden Stufe und Wärme vom in dem zweiten Gehäuseteil 2 aufgenommenen Lager der eintreibenden Welle über die Rippen 15 an den Luftstrom abgebbar.

Zusätzlich ist die radiale Außenseite des Statorblechpakets geschwärzt ausgeführt, also beispielsweise mit einer dunklen oder schwarzen Farbe lackiert oder beschichtet.

Ebenso ist die radiale Innenwandung des Gehäuses 4 geschwärzt ausgeführt, also beispielsweise mit einer dunklen oder schwarzen Farbe lackiert oder beschichtet.

Auf diese Weise ist zusätzlich ein Strahlungstransport für einen Teil des Wärmestroms vom Motor zur Umgebung hin ermöglicht.

Der Lagerflansch 31 weist einen Grundplattenabschnitt 42 auf, auf dem ein Trennwandabschnitt 43, insbesondere einen ovalförmigen Trennwandabschnitt 43, ausgeformt ist.

Dieser Trennwandabschnitt 43 trennt den Raumbereich des Luftstromes 12 ab vom den Winkelsensor umgebenden Raumbereich. Der B-seitig, also auf der vom Getriebe abgewandten axialen Seite des Grundplattenabschnitts 42, aus dem Grundplattenabschnitt 42 hervorragende Teil des Winkelsensors 8 überdeckt also einen axialen Bereich, der von dem vom Trennwandabschnitt 43 überdeckten axialen Bereich umfasst ist.

Der Grundplattenabschnitt 42 weist zwei axial durchgehende Ausnehmung 41 auf, die zur Durchführung von Kabeln vom Raumbereich der Bremse 7 und des Motors zum von dem Trennwandabschnitt 43 zumindest teilweise, insbesondere nämlich in radialer Richtung, umgebenen Raumbereich geeignet ist.

Eine mittig angeordnete Aufnahme 44 für den Winkelsensor 8 ist ebenfalls im Grundplattenabschnitt 42 vorhanden.

Der Trennwandabschnitt 43 weist in verschiedenen Umfangsrichtungen verschiedene Radialabstände auf und ist somit in Umfangsrichtung asymmetrisch, also nicht drehsymmetrisch. Der Verlauf des Radialabstands vom Umfangswinkel ist oval oder ovalähnlich. Die Schmalseite ermöglicht ein Anordnen der Lüfter 11 neben dem Trennwandabschnitt 43, wobei die Lüfter 11 in axialer Richtung an einem jeweiligen Vorsprung 44 anliegen, so dass deren axiale Position in einfacher Weise festlegbar ist.

Im Grundplattenabschnitt 42 sind auch noch axial durchgehende Ausnehmungen zum Durchlass des Luftstroms 12 vorsehbar, der durch die Lüfter 11 förderbar ist.

Der Grundplattenabschnitt 42 weist einen kreisförmigen radialen Außenrand auf.

Der Deckel 10 verschließt den Trennwandabschnitt 43, so dass das den Winkelsensor aufnehmende Raumbereich getrennt ist von dem Luftstrom 12.

Der Luftstrom 12 wir begrenzt vom Deckel 10, dem Gehäuse 4 und dem Statorgehäuse 3 sowie dem zweiten Gehäuse 2.

Das Statorgehäuse 3 weist einen lichten Abstand 9 zum Gehäuse 4 auf, der im Wesentlichen der radialen Ausdehnung eines jeweiligen, im Statorgehäuse 3 ausgeformten Kanals entspricht.

Die Umfangswinkelposition der Rippen 15 des zweiten Gehäuseteils 2 sind derart gewählt, dass an derselben Umfangswinkelposition eine jeweilige, sich radial erstreckende Trennwand angeordnet ist. Somit tritt der Luftstrom 12 aus dem jeweiligen im Strangguss angeordneten Kanal in eine jeweilige Ausnehmung des zweiten Gehäuseteils 2, die zumindest teilweise begrenzt ist von Rippen 15. Der Luftstrom 12 tritt danach aus der Ausnehmung des zweiten Gehäuseteils 2 aus in einen Raumberiech, der den Zwischenraumbereich zwischen Statorgehäuseteil und Gehäuse 4 enthält.

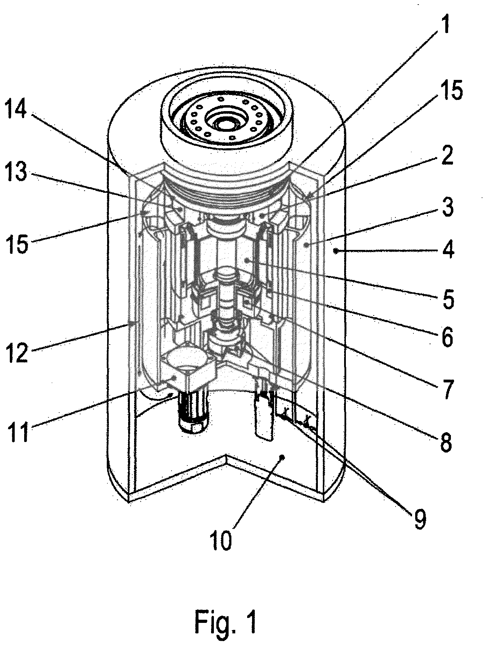

Wie in Figur 1 gezeigt, ist das Gehäuse 4 topfförmig ausgeformt, wobei in einer Ausnehmung des Topfbodens das erste Gehäuseteil 1 des Getriebes zumindest teilweise eingesteckt und verbunden ist. Die abtreibende Welle des Getriebes führt somit durch diese Ausnehmung des Topfbodens hindurch.

Der Luftstrom 12 streicht beim durchströmen der Ausnehmungen im zweiten Gehäuseteil 2 an taschenförmigen Vertiefungen 13 des zweiten Gehäuseteils 2 vorbei, wodurch sich auch ein Wirbel in dem Bereich der jeweiligen Vertiefung 13 ausbildet, so dass an der Vertiefung 13 Staub und/oder Schmutz abgelagert wird.

Darüber hinaus sind die Vertiefungen nicht nur Schmutzsammeltaschen, sondern bieten einen verbesserten und/oder erweiterten Betätigungsbereich zur Betätigung von Schrauben 14, welche die Verbindung des ersten mit dem zweiten Gehäuseteil (1, 2) ermöglichen.

Dabei sind die Schrauben 14 axial gerichtet und jeweils durch eine jeweilige, axial durchgehende Ausnehmung, insbesondere Bohrung, geführt und in eine Gewindebohrung des ersten Gehäuseteils 1 eingeschraubt. Alternativ ist die Schraube auch durch die im ersten und zweiten Gehäuseteil (1, 2) durchgehende Ausnehmung geführt. Die Vertiefung 13 ist nach radial innen begrenzt durch das zweite Gehäuseteil 2, nach radial außen aber offen.

### Bezugszeichenliste

1 erstes Gehäuseteil des Getriebes
2 zweites Gehäuseteil des Getriebes, insbesondere Vorstufengehäuse
3 Statorgehäuse, insbesondere Stranggussteil
4 Gehäuse, insbesondere Rohrgehäuse
5 Rotor
6 Stator
7 Bremse
8 Geber
9 lichter Abstand
10 Deckel
11 Lüfter
12 Luftströmung
13 Tasche, insbesondere Vertiefung am zweiten Gehäuseteil
14 Schraubverbindung zwischen erstem und zweitem Gehäuseteil
15 Rippe
30 Lüftermotor
31 Lagerflansch, insbesondere B-seitiger Lagerflansch des Elektromotors
40 Geberaufnahme
41 Kabeldurchführung, insbesondere axial durchgehende Ausnehmung zur Kabeldurchführung
42 Grundplattenabschnitt
43 Trennwandabschnitt, insbesondere ovalförmiger Trennwandabschnitt
44 Vorsprung zur Begrenzung des Lüfters 11
50 Ausnehmung im Statorgehäuse 3
51 Bohrung für Schrauben

## Patentansprüche

1. Antriebsvorrichtung, aufweisend einen Elektromotor
wobei der Elektromotor ein Statorblechpaket mit Statorwicklungen aufweist, das in einem Statorgehäuse (3) aufgenommen ist,
wobei das Statorgehäuse (3) axial, also in Rotorwellenachsrichtung, durchgehende Ausnehmungen (50) aufweist,
wobei das Statorgehäuse (3) von einem Gehäuse (4), insbesondere Rohrgehäuse und/oder topfförmige Gehäuse (4), der Antriebsvorrichtung umgeben ist, insbesondere radial umgeben ist, wobei das Gehäuse (4) vom Statorgehäuse (3) beabstandet ist,
so, dass ein insbesondere zirkulierender Luftstrom innerhalb des Gehäuses (4) ausbildbar ist, wobei die Ausnehmungen (50) den Luftstrom in axialer Richtung durchführen und der Luftstrom im beabstandeten Bereich zwischen Statorgehäuseteil und Gehäuse (4) in entgegengesetzter Richtung rückgeführt wird,
**dadurch gekennzeichnet, dass**
die Antriebsvorrichtung ein von dem Elektromotor angetriebenes Getriebe aufweist,
**wobei als Gehäuse (4) ein schlechterer Wärmeleiter verwendet ist als als Statorgehäuse (3).**

2. Antriebsvorrichtung nach **Anspruch 1,**
**dadurch gekennzeichnet, dass**
das Statorgehäuse (3) ein Stranggussteil ist, insbesondere wobei die Ziehrichtung parallel zur axialen Richtung, insbesondere also parallel zur Rotorwellenachsrichtung, ist.

3. Antriebsvorrichtung nach mindestens einem der vorangegangenen Ansprüche,
**dadurch gekennzeichnet, dass**
das Getriebe ein erstes und ein zweites Gehäuseteil (1, 2) aufweist, die miteinander verbunden sind,
wobei das Statorgehäuse (3) mit dem zweiten Gehäuseteil (2) verbunden, insbesondere schraubverbunden, ist,
wobei das Gehäuse (4), insbesondere Rohrgehäuse und/oder topfförmige Gehäuse (4), der Antriebsvorrichtung mit dem zweiten Gehäuseteil (2) verbunden, insbesondere schraubverbunden, ist.

4. Antriebsvorrichtung nach mindestens einem der vorangegangenen Ansprüche,
**dadurch gekennzeichnet, dass**
der Luftstrom aus den Ausnehmungen (50) des Statorgehäuses (3) jeweilige Ausnehmungen (50) des zweiten Gehäuseteils (2) durchströmt,
insbesondere die durch am zweiten Gehäuseteil (2) hervor ragende Rippen (15) zumindest teilweise begrenzt sind.

5. Antriebsvorrichtung nach mindestens einem der vorangegangenen Ansprüche,
**dadurch gekennzeichnet, dass**
das Statorgehäuse (3) an der dem Gehäuse (4) zugewandten Oberfläche, insbesondere an seiner Außenfläche, eine Beschichtung aufweist zur Erhöhung der abgestrahlten Wärmeleistung,
und/oder dass
das Gehäuse (4) an der dem Statorgehäuse (3) zugewandten Oberfläche, insbesondere an seiner Innenfläche, eine Beschichtung aufweist zur Erhöhung der absorbierten Wärmeleistung.

6. Antriebsvorrichtung nach mindestens einem der vorangegangenen Ansprüche,
**dadurch gekennzeichnet, dass**
der Luftstrom konvektiv, insbesondere nur konvektiv, angetrieben ist.

7. Antriebsvorrichtung nach mindestens einem der vorangegangenen Ansprüche,
**dadurch gekennzeichnet, dass**
zumindest ein Lüfter (11) oder zwei Lüfter (11) zum Antreiben des Luftstroms an einem Lagerflansch (31) des Motors angeordnet ist oder sind.

8. Antriebsvorrichtung nach mindestens einem der vorangegangenen Ansprüche,
**dadurch gekennzeichnet, dass**
der Lagerflansch (31) einen insbesondere kreisförmigen Grundplattenabschnitt (42) aufweist und einen daran angeordneten Trennwandabschnitt,
wobei der Trennwandabschnitt (43) zur Trennung des Luftstroms von einem Raumbereich vorgesehen ist, der den B-seitigen, insbesondere den vom Getriebe abgewandten, axialen Endbereich der Rotorwelle umgibt oder einen an diesem Endbereich angeordneten Winkelsensor zumindest teilweise umgibt.

9. Antriebsvorrichtung nach mindestens einem der vorangegangenen Ansprüche,
**dadurch gekennzeichnet, dass**
im Lagerflansch (31) ein Lager einer Rotorwelle des Motors aufgenommen ist.

10. Antriebsvorrichtung nach mindestens einem der vorangegangenen Ansprüche,
**dadurch gekennzeichnet, dass**
der Trennwandabschnitt (43) in einer ersten Umfangswinketrichtung radial weniger ausgedehnt ist als in einer von der ersten unterschiedlichen zweiten Umfangswinkelrichtung.

11. Antriebsvorrichtung nach mindestens einem der vorangegangenen Ansprüche,
**dadurch gekennzeichnet, dass**
der Lüfter (11) radial außerhalb des Trennwandabschnitts (43) angeordnet ist, wobei der Lüfter (11) von der zweiten Umfangswinkelrichtung in Umfangsrichtung beabstandet ist,
insbesondere wobei der vom Lüfter (11) überdeckte Umfangswinkelbereich den ersten Umfangswinkel umfasst.

12. Antriebsvorrichtung nach mindestens einem der vorangegangenen Ansprüche,
**dadurch gekennzeichnet, dass**
der Trennwandabschnitt (43) an der vom Getriebe abgewandten axialen Seite des Grundplattenabschnitts (42) angeordnet ist
und/oder dass am Trennwandabschnitt (43) ein Vorsprung (44) zur axialen Begrenzung des Lüfters (11) angeformt ist.

13. Antriebsvorrichtung nach mindestens einem der vorangegangenen Ansprüche,
**dadurch gekennzeichnet, dass**
der Grundplattenabschnitt (42) zumindest eine, insbesondere zwei, Ausnehmungen (50) aufweist zur Kabeldurchführung (41),
**und/oder dass**
das Statorgehäuse (3) an der dem Gehäuse (4) zugewandten Oberfläche, insbesondere an seiner Außenfläche, eine Beschichtung aufweist zur Erhöhung der abgestrahlten Wärmestrahlung,
**und/oder dass**
der Grundplattenabschnitt (42) eine mittig angeordnete Ausnehmung (50) zur Aufnahme eines Stators (6) eines Winkelsensors **aufweist.**

14. Antriebsvorrichtung nach mindestens einem der vorangegangenen Ansprüche,
**dadurch gekennzeichnet, dass**
das zweite Gehäuseteil (2) taschenförmige Vertiefungen an seiner Oberfläche aufweist, an welchen der Luftstrom vorbeiströmt,
insbesondere so, dass Schmutz, Staub und/oder vom Luftstrom in den taschenförmigen Vertiefungen, insbesondere Luftkammern, des zweiten Gehäuseteils (2) ablagerbar ist,
wobei ein Verbindungselement, insbesondere Schraube, das erste Gehäuseteil (1) mit dem zweiten Gehäuseteil (2) verbindet und der zur Betätigung des Verbindungelements mit einem Werkzeug benötigte Raumbereich mittels der Vertiefung bereitgestellt wird.

## Claims

1. A drive device having an electric motor, wherein the electric motor has a stator iron core with stator windings, which core is received in a stator frame (3), wherein the stator frame (3) has openings (50) passing through axially, therefore in the rotor shaft axial direction, wherein the stator frame (3) is surrounded by a housing (4), in particular a tubular housing and/or a pot-shaped housing (4), of the drive device, in particular radially surrounded, wherein the housing (4) is spaced apart from the stator frame (3), so that an airflow, in particular a circulating airflow, is formable within the housing (4), wherein the openings (50) guide the airflow through in an axial direction and the airflow is guided back in the opposite direction in the spaced-apart region between stator frame part and housing (4), **characterised in that** the drive device has a gear unit driven by the electric motor, wherein a worse heat conductor is used for the housing (4) than for the stator frame (3).

2. A drive device according to claim 1, **characterised in that** the stator frame (3) is a continuous cast part, in particular wherein the drawing direction is parallel to the axial direction, in particular therefore parallel to the rotor shaft axial direction.

3. A drive device according to at least one of the preceding claims, **characterised in that** the gear unit has a first and a second housing part (1, 2) which are connected to one another, wherein the stator frame (3) is connected to the second housing part (2), in particular screw-connected, wherein the housing (4), in particular the tubular housing and/or the pot-shaped housing (4), of the drive device is connected to the second housing part (2), in particular screw-connected.

4. A drive device according to at least one of the preceding claims, **characterised in that** the airflow from the openings (50) of the stator frame (3) flows through respective openings (50) of the second housing part (2), in particular which are at least partially bounded by ribs (15) projecting on the second housing part (2).

5. A drive device according to at least one of the preceding claims, **characterised in that** the stator frame (3) has at the surface facing the housing (4), in particular at the outer surface of said surface, a coating for increasing the radiated thermal output, and/or **in that** the housing (4) has at the surface facing the stator frame (3), in particular at the inner surface of said surface, a coating for increasing the absorbed thermal output.

6. A drive device according to at least one of the preceding claims, **characterised in that** the airflow is driven convectively, in particular only convectively.

7. A drive device according to at least one of the preceding claims, **characterised in that** at least one fan (11) or two fans (11) for driving the airflow is or are arranged on a bearing flange (31) of the motor.

8. A drive device according to at least one of the preceding claims, **characterised in that** the bearing flange (31) has an, in particular circular, base plate portion (42) and a separating wall portion arranged thereon, wherein the separating wall portion (43) is provided to separate the airflow from a spatial region which surrounds the rotor-shaft axial end region, located at the B-side and in particular remote from the gear unit, or at least partially surrounds an angle sensor arranged at this end region.

9. A drive device according to at least one of the preceding claims, **characterised in that** a bearing of a rotor shaft of the motor is received in the bearing flange (31).

10. A drive device according to at least one of the preceding claims, **characterised in that** the separating wall portion (43) has less radial extension in a first circumferential angular direction than in a second circumferential angular direction different from the first.

11. A drive device according to at least one of the preceding claims, **characterised in that** the fan (11) is arranged radially exterior to the separating wall portion (43), wherein the fan (11) is spaced apart from the second circumferential angular direction in the circumferential direction, in particular wherein the circumferential angular region covered by the fan (11) encompasses the first circumferential angle.

12. A drive device according to at least one of the preceding claims, **characterised in that** the separating wall portion (43) is arranged at the axial side, remote from the gear unit, of the base plate portion (42) and/or **in that** a projection (44) to axially bound the fan (11) is formed on the separating wall portion (43).

13. A drive device according to at least one of the preceding claims, **characterised in that** the base plate portion (42) has at least one, in particular two, openings (50) for cable passage (41), and/or **in that** the stator frame (3) has at the surface facing the housing (4), in particular at the outer surface of said surface, a coating for increasing the radiated thermal radiation, and/or **in that** the base plate portion (42) has a centrally arranged opening (50) for receiving a stator (6) of an angle sensor.

14. A drive device according to at least one of the preceding claims, **characterised in that** the second housing part (2) has pocket-shaped depressions at its surface, past which there flows the airflow, in particular so that dirt, dust and/or can be deposited by the airflow in the pocket-shaped depressions, in particular air chambers, of the second housing part (2), wherein a connecting element, in particular screw, connects the first housing part (1) to the second housing part (2) and the spatial region required to operate the connecting element with a tool is provided by means of the depression.

## Revendications

1. Dispositif d'entraînement, comprenant un moteur électrique,
le moteur électrique comportant un noyau de stator feuilleté qui est pourvu d'enroulements de stator et qui est reçu dans un boîtier de stator (3),
le boîtier de stator (3) comportant des évidements (50) axialement traversants, donc dans la direction axiale de l'arbre du rotor,
le boîtier de stator (3) étant entouré, notamment radialement, par un boîtier (4), notamment un boîtier tubulaire et/ou un boîtier (4) en forme de pot, du dispositif d'entraînement, le boîtier (4) étant espacé du boîtier de stator (3),
de sorte qu'un flux d'air notamment circulant puisse être formé à l'intérieur du boîtier (4), les évidements (50) laissant passer le flux d'air dans la direction axiale et le flux d'air étant renvoyé en sens inverse dans la zone ménagée entre la partie de boîtier de stator et le boîtier (4),
**caractérisé en ce que**
le dispositif d'entraînement comporte une transmission entraînée par le moteur électrique, le boîtier (4) utilisé étant un plus mauvais conducteur de chaleur que le boîtier de stator (3).

2. Dispositif d'entraînement selon la revendication 1,
**caractérisé en ce que**
le boîtier de stator (3) est une pièce coulée en continu, en particulier la direction d'étirage étant parallèle à la direction axiale, donc en particulier parallèle à la direction de l'axe de l'arbre du rotor.

3. Dispositif d'entraînement selon l'une au moins des revendications précédentes,
**caractérisé en ce que**
la transmission comporte une première et une deuxième partie de boîtier (1, 2) qui sont reliées l'une à l'autre, le boîtier de stator (3) étant relié, en particulier vissé, à la deuxième partie de boîtier (2),
le boîtier (4), en particulier le boîtier tubulaire et/ou le boîtier (4) en forme de pot, du dispositif d'entraînement étant relié, notamment vissé, à la deuxième partie de boîtier (2).

4. Dispositif d'entraînement selon l'une au moins des revendications précédentes,
**caractérisé en ce que**
le flux d'air provenant des évidements (50) du boîtier de stator (3) s'écoule à travers des évidements respectifs (50) de la deuxième partie de boîtier (2), en particulier qui sont au moins partiellement limités par des nervures (15) saillant au niveau de la deuxième partie de boîtier (2).

5. Dispositif d'entraînement selon l'une au moins des revendications précédentes,
**caractérisé en ce que**
le boîtier de stator (3) comporte, sur la surface dirigée vers le boîtier (4), en particulier sur sa surface extérieure, un revêtement destiné à augmenter la puissance calorifique rayonnée,
et/ou **en ce que**
le boîtier (4) comporte, sur la surface dirigée vers le boîtier de stator (3), en particulier sur sa surface intérieure, un revêtement destiné à augmenter la puissance calorifique absorbée.

6. Dispositif d'entraînement selon l'une au moins des revendications précédentes,
**caractérisé en ce que**
le flux d'air est entraîné par convection, en particulier uniquement par convection.

7. Dispositif d'entraînement selon l'une au moins des revendications précédentes,
**caractérisé en ce que**
au moins un ventilateur (11) ou deux ventilateurs (11) destinés à entraîner le flux d'air sont disposés sur un flasque de palier (31) du moteur.

8. Dispositif d'entraînement selon l'une au moins des revendications précédentes,
**caractérisé en ce que**
le flasque de palier (31) comporte une portion de plaque de base (42) en particulier circulaire et une portion de paroi de séparation disposée sur celle-ci,
la portion de paroi de séparation (43) étant prévue pour séparer le flux d'air d'une zone de l'espace qui entoure le côté verso, en particulier la zone d'extrémité axiale de l'arbre de rotor qui est dirigée à l'opposé de la transmission, ou qui entoure au moins partiellement un capteur d'angle disposé au niveau de cette zone d'extrémité.

9. Dispositif d'entraînement selon l'une au moins des revendications précédentes,
**caractérisé en ce que**
un palier d'un arbre de rotor du moteur est logé dans le flasque de palier (31).

10. Dispositif d'entraînement selon l'une au moins des revendications précédentes,
**caractérisé en ce que**
la portion de paroi de séparation (43) est radialement moins étendue dans une première direction angulaire circonférentielle que dans une deuxième direction angulaire circonférentielle différente de la première.

11. Dispositif d'entraînement selon l'une au moins des revendications précédentes,
**caractérisé en ce que**
le ventilateur (11) est disposé radialement à l'extérieur de la portion de paroi de séparation (43), le ventilateur (11) étant espacé de la deuxième direction angulaire circonférentielle dans la direction circonférentielle, en particulier la zone angulaire circonférentielle couverte par le ventilateur (11) comprenant le premier angle circonférentiel.

12. Dispositif d'entraînement selon l'une au moins des revendications précédentes,
**caractérisé en ce que**
la portion de paroi de séparation (43) est disposée sur le côté axial de la portion de plaque de base (42) qui est dirigé à l'opposé de la transmission et/ou **en ce qu'**une saillie (44) destinée à délimiter axialement le ventilateur (11) est formée sur la portion de paroi de séparation (43).

13. Dispositif d'entraînement selon l'une au moins des revendications précédentes,
**caractérisé en ce que**
la portion de plaque de base (42) comporte au moins un, en particulier deux, évidements (50) destinés au passage de câbles (41),
et/ou **en ce que**
le boîtier de stator (3) comporte, sur la surface dirigée vers le boîtier (4), en particulier sur sa surface extérieure, un revêtement destiné à augmenter le rayonnement thermique rayonné,
et/ou **en ce que**
la portion de plaque de base (42) comporte un évidement (50) disposé au centre et destiné à loger un stator (6) d'un capteur d'angle.

14. Dispositif d'entraînement selon l'une au moins des revendications précédentes,
**caractérisé en ce que**
la deuxième partie de boîtier (2) comporte sur sa surface des creux en forme de poches devant lesquels le flux d'air s'écoule,
en particulier de sorte que de la saleté, de la poussière et/ou du flux d'air puissent se déposer dans les creux en forme de poches, notamment dans des chambres à air, de la deuxième partie de boîtier (2),
un élément de liaison, en particulier une vis, reliant la première partie de boîtier (1) à la deuxième partie de boîtier (2) et la zone de l'espace, nécessaire pour actionner l'élément de liaison à un outil, étant ménagée au moyen du creux.
